# EUROPÄISCHE PATENTSCHRIFT

(11) **EP 1 630 460 B1**
(45) Veröffentlichungstag und Bekanntmachung des Hinweises auf die Patenterteilung: **15.02.2012**
(21) Anmeldenummer: 05014602.6
(22) Anmeldetag: 06.07.2005
(51) Int. Cl.: F16H 61/30

(54) **Schaltvorrichtung für das Getriebe eines Kraftfahrzeugs**
Gearshift device for the transmission of a motor vehicle
Dispositif de changement de vitesses pour la transmission d'un véhicule automobile

(30) Priorität: 27.08.2004 DE 102004041543
(43) Veröffentlichungstag der Anmeldung: 01.03.2006
(73) Patentinhaber: ZF Friedrichshafen AG, 88038 Friedrichshafen (DE)
(72) Erfinder: Fischer, Dieter, 88149 Nonnenhorn (DE)

(56) Entgegenhaltungen:
- DE-A1- 19 839 854
- DE-A1- 19 840 052

## Beschreibung

Die vorliegende Erfindung betrifft eine Schaltvorrichtung für das Getriebe eines Kraftfahrzeugs, umfassend eine Servounterstützungseinrichtung, gemäß dem Oberbegriff des Patentanspruchs 1.

Aus dem Stand der Technik sind Schaltvorrichtungen für Getriebe bekannt, die Servounterstützungseinrichtungen umfassen, welche den Fahrer bei der manuellen Schaltung unterstützen.

Hierbei kann es sich um Getriebe, umfassend ein manuell vom Fahrer an einem Handschalthebel schaltbares Hauptgetriebeteil, ein über Ventile pneumatisch schaltbares Splitgruppengetriebe und ein über Ventile pneumatisch schaltbares Bereichsgruppengetriebe handeln, oder um mehrgängige Getriebe ohne Splitgruppengetriebe und Bereichsgruppengetriebe, wie z.B. ein Sechs-Gang-Getriebe sowie ein Getriebe mit einem Splitgruppengetriebe.

Hierbei entsteht die Notwendigkeit, Schaltungen im Getriebe zu verhindern, die auf Grund sonstiger Bedingungen, wie beispielsweise zu hoher Fahrzeuggeschwindigkeiten bezogen auf den zu schaltenden Gang, nicht zulässig sind, um Bauteile des Getriebes, beispielsweise Synchronisierungen zu schützen. Ferner kann es sich als vorteilhaft erweisen, einzelne Gänge ohne Servounterstützung bzw. Kraftverstärkung zu schalten, um beispielsweise den Verschleiß der am Schaltvorgang beteiligten Bauteile zu reduzieren.

Aus der DE 198 39 854 A1 ist eine Schaltvorrichtung bekannt geworden, bei der eine Servounterstützungseinrichtung die Schaltkraft des Fahrers unterstützt. Dabei soll die Zufuhr der unterstützenden Druckluft reduziert werden und beispielsweise nur dann zugelassen werden, wenn die Fahrzeugkupplung betätigt wird. Dafür sind zusätzliche Ventile erforderlich, die die Reduzierung der Druckluft ermöglichen.

Femer sind Schaltvorrichtungen bekannt, bei denen der Servodruck in Abhängigkeit von der Schaltgasse einstellbar ist. Hierbei ist ein Ventil vorgesehen, welches in Abhängigkeit von der Position der Schaltwelle über ein Druckreduzierventil den Servodruck reduziert bzw. anpasst. Die Druckniveaus können in Abhängigkeit von der Position der Schaltwelle bzw. von der Schaltgasse bestimmt werden, da z.B. über die Klinke und die Kolbenstange des Gassensperrzylinders die Position der Schaltwelle und dadurch die Schaltgasse erkennbar ist. Diese Lösung der Servoluftabschaltung wirkt immer nur in einer Gasse für beide Gänge und ist in nachteiliger Weise technisch aufwendig und folglich teuer.

Aus der DE 198 40 052 A1 der Anmelderin, die als nächstliegender Stand der Technik angesehen wird , ist eine Schaltvorrichtung für ein Wechselgetriebe eines Kraftfahrzeugs bekannt, welche eine Servounterstützungseinrichtung umfasst. Hierbei ist eine Schaltanlage mit einem auslösenden Hebel verbunden, der mit einer Steuerstange der Servounterstützungseinrichtung verbunden ist; ferner ist eine Welle vorgesehen, die über Hebel in Schaltschienen des Getriebes eingreift. Die Schaltvorrichtung ist fest am Getriebegehäuse angeordnet und weist eine zentrale Schaltwelle auf, die von der Schaltanlage drehbar betätigbar ist, um die Handschaltkraft auf den auslösenden Hebel der Servounterstützungseinrichtung und auf die Schaltschienen des Getriebes zu übertragen.

Des weiteren ist die von der Servounterstützungseinrichtung gelieferte Schaltkraft auf eine axial fest in der Schaltvorrichtung angeordnete Hohlwelle übertragbar, welche die zentrale Schaltwelle umgibt und mit der zentralen Schaltwelle zum Schalten der Schaltschienen verdrehbar ist. Die Wählbewegung erfolgt durch die axiale Verschiebung der zentralen Schaltwelle innerhalb der Hohlwelle; die Schaltbewegung ergibt sich aus der Drehbewegung der zentralen Schaltwelle, welche ein Verschwenken des auslösenden Hebels bewirkt.

Im Rahmen der DE 198 40 052 A1 wird vorgeschlagen, dass in der zentralen Schaltwelle axial ausgerichtete Nuten bzw. Längsnuten vorgesehen sind, in die Stifte zur Bildung einer verdrehfesten aber axial beweglichen Verbindung der zentralen Schaltwelle mit dem auslösenden Hebel der Servounterstützungseinrichtung eingreifen.

Der vorliegenden Erfindung liegt die Aufgabe zugrunde, ausgehend von dem genannten Stand der Technik eine Schaltvorrichtung für ein Getriebe anzugeben, bei der ein Schutz der Bauteile des Getriebes beim Schalten bestimmter Gänge, insbesondere der Synchronisierungen, auf einfache Weise ermöglicht wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Schaltvorrichtung vorgeschlagen, umfassend eine zentrale Schaltwelle, deren axiale Verschiebung in einer Wählbewegung und deren Drehbewegung in einer Schaltbewegung resultiert, sowie eine Servounterstützungseinrichtung für die Schaltbewegung, welche bei der Drehbewegung der zentralen Schaltwelle durch Übertragung der Drehbewegung über einen Hebel auf das Steuerventil der Servounterstützungseinrichtung aktiviert wird, bei der die Servounterstützung in bestimmten Gängen überbrückbar bzw. nicht aktivierbar ist. Dies wird dadurch erreicht, dass die zentrale Schaltwelle gemäß der Erfindung bei den durch die Servounterstützungseinrichtung nicht zu unterstützenden Gängen eine Quernut aufweist, derart, dass die Drehbewegung der Schaltwelle zum Schalten eines nicht zu unterstützenden Ganges nicht auf den Hebel übertragen wird.

Gemäß der Erfindung wird die Handschaltkraft in diesem Fall direkt über die Fläche der Schaltwelle über geeignete Bauteile, wie beispielsweise einen Stift und einen Mitnehmer, auf die bei diesem Schaltvorgang beteiligte Synchronisierung übertragen.

Durch die erfindungsgemäße Konzeption wird die Möglichkeit geschaffen, auf einfache und kostengünstige Weise gangabhängig die Servounterstützung ganz abzuschalten, indem diese überbrückt wird. Dies kann in vorteilhafter Weise beispielsweise bei Gruppengetrieben dazu benützt werden, um den Rückwärtsgang ohne Unterstützung, d.h. mit geringer Kraft zu schalten, um damit das Ratschen und folglich die Belastung der Schaltungsteile deutlich zu verringern. Des weiteren kann die Erfindung beispielsweise bei 6-Gang-Getrieben eingesetzt werden, bei welchen sehr große Schaltkraftunterschiede zwischen den Schaltungen in der Gasse 1/2 und der Gasse 5/6 bestehen. In diesem Fall kann ein auf die Gassen 1/2 und 3/4 entsprechend stark ausgelegter Servo beim Schalten eines oder beider Gänge in der Gasse 5/6 und des R-Ganges durch die erfindungsgemäßen Quernuten überbrückt werden.

Die Erfindung wird im Folgenden anhand der beigefügten Figuren beispielhaft näher erläutert. Es stellen dar:
- Fig. 1: eine schematische Ansicht einer Schaltvorrichtung gemäß der Erfindung;
- Fig. 2: eine schematische Ansicht der zentralen Schaltwelle, beispielsweise eines 4-Gang-Grundgetriebes, welche gemäß der Erfindung ausgeführt ist; und
- Fig. 3: eine schematische Ansicht der zentralen Schaltwelle, beispielsweise eines 6-Gang-Getriebes, welche gemäß der Erfindung ausgeführt ist.

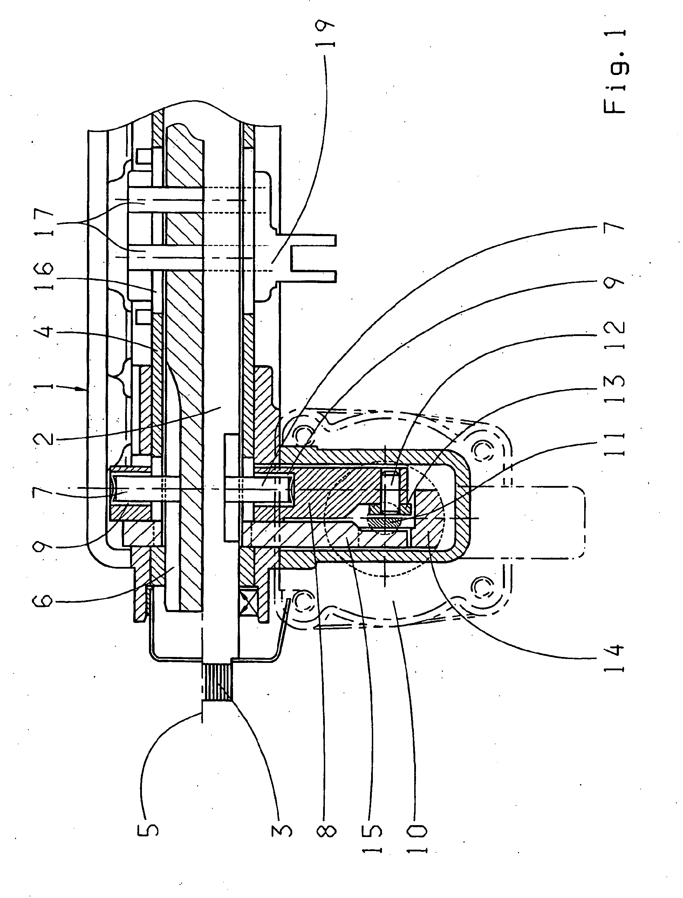

In Fig. 1 ist eine bevorzugte Ausführungsform einer erfindungsgemäßen Schaltvorrichtung 1 in einer schematischen Schnittansicht dargestellt. Sie umfasst eine mit einem nicht dargestellten Hebel über eine Verzahnung 3 verbundene zentrale Schaltwelle 2, welche innerhalb einer Hohlwelle 4 um die Achse 5 drehbar gelagert ist. Die Schaltwelle weist an ihrem Umfang in Längsrichtung, d.h. entlang der Achse 5, Längsnuten 6 auf, in die Stifte 7 zur Übertragung der Handschaltkraft eingreifen, die ihrerseits in einem Hebel 8, vorzugsweise in Nadelbüchsen 9, drehbar gelagert sind. Hierbei sind die Stifte 7 derart in den Nuten 6 angeordnet, dass eine axiale Verschiebung der Schaltwelle 2, also die Wählbewegung ermöglicht wird, wobei ein Verdrehen der Welle 2 um die Achse 5 zu einem Verschwenken des Hebels 8 führt, was wiederum zu einer Aktivierung der Servounterstützungseinrichtung 10 führt, da der Hebel 8 in eine Steuerstange 11 der Servounterstützungseinrichtung 10 eingreift. Der Hebel 8 weist zur Reduzierung von Reibungsverlusten in vorteilhafter Weise eine auf einem Bolzen 12 drehbar angeordnete Rolle 13 auf, die in die Steuerstange 11 der Servounterstützungseinrichtung 10 eingreift.

Die von der Servounterstützungseinrichtung 10 erzeugte Verstärkungskraft wird von der Kolbenstange 14 auf den Hebel 15 und anschließend auf die Hohlwelle 4 übertragen. Femer weist die Hohlwelle 4 Langlöcher 16 auf, durch die Stifte 17 hindurchragen, welche in einem Mitnehmer 19 gelagert sind. Der Mitnehmer 19 greift über einen nicht dargestellten Hebel in die Schaltschienen des Getriebes ein.

Gemäß der Erfindung sind zur Überbrückung der Servounterstützungseinrichtung 10 beim Schalten von bestimmten Gängen an den Längsnuten 6 Quernuten 18 (d.h. Nuten am Umfang der Schaltwelle 2 in Querrichtung) vorgesehen, welche ein Verdrehen der Schaltwelle 2 zum Schalten ohne ein Verdrehen der Stifte 7 und somit ohne ein Verschwenken des Hebels 8 ermöglichen. In diesem Fall wird die Handschaltkraft direkt über die Schaltwelle 2 auf einen Stift 17 und von dort auf den Mitnehmer 19 und die am Schaltvorgang beteiligte Synchronisierung übertragen, da die Drehbewegung der Schaltwelle 2 aufgrund der Quernut 18 nicht auf die Stifte 7 zur Übertragung der Handschaltkraft übertragen wird, welche in diesem Fall in die Quernut eingreifen und damit nicht auf die Steuerstange 11 und die Servounterstützungseinrichtung 10 übertragen wird.

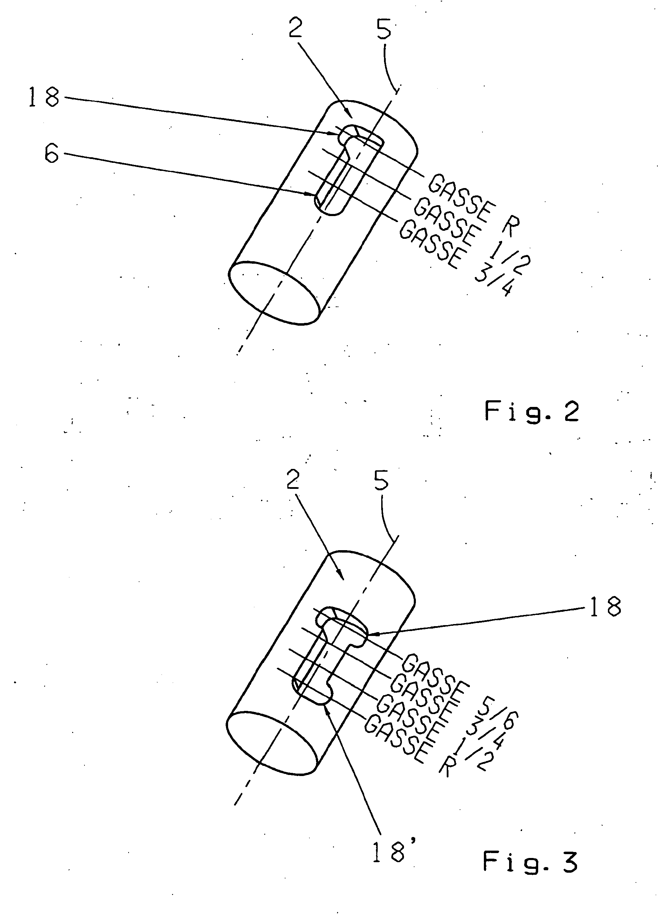

Die Quernut 18 wird in den Fig. 2 und 3 gezeigt. Fig. 2 zeigt die Schaltwelle 2 eines 4-Gang-Grundgetriebes, bei der der Rückwärtsgang ohne Servounterstützung geschaltet wird. Zu diesem Zweck ist in einem Bereich der Längsnut 6, der der Gasse des Rückwärtsganges entspricht, eine Quernut 18 vorgesehen.

Bei 6-Gang Getrieben kann beispielsweise eine auf die Gassen 1/2 und 3/4 entsprechend stark ausgelegte Servounterstützungseinrichtung beim Schalten eines oder beider Gänge in der Gasse 5/6 und des R-Ganges durch die erfindungsgemäßen Quernuten überbrückt werden. Dies ist in Fig. 3 veranschaulicht; hierbei ist eine erste Quernut 18 zum Überbrücken der Servounterstützungseinrichtung in der Gasse 5/6 und eine zweite Quernut 18' zum Überbrücken der Servounterstützungseinrichtung in der Gasse des Rückwärtsganges vorgesehen.

Durch die Erfindung ist es möglich, durch eine gezielte Anordnung der Quernuten jeden Gang eines Getriebes ohne eine Aktivierung der Servounterstützungseinrichtung zu schalten.

Selbstverständlich fällt auch jede konstruktive Ausbildung, insbesondere jede räumliche Anordnung der Bauteile der Schaltvorrichtung an sich sowie zueinander und soweit technisch sinnvoll, unter den Schutzumfang der vorliegenden Ansprüche, ohne die Funktion der Schaltvorrichtung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Schaltvorrichtung
- 2: zentrale Schaltwelle
- 3: Verzahnung
- 4: Hohlwelle
- 5: Achse
- 6: Längsnut
- 7: Stift
- 8: Hebel
- 9: Nadelbüchse
- 10: Servounterstützungseinrichtung
- 11: Steuerstange
- 12: Bolzen
- 13: Rolle
- 14: Kolbenstange
- 15: Hebel
- 16: Langloch
- 17: Stift
- 18: Quernut
- 18': Quernut
- 19: Mitnehmer

## Patentansprüche

1. Schaltvorrichtung für das Getriebe eines Kraftfahrzeugs, umfassend eine zentrale Schaltwelle, deren axiale Verschiebung in einer Wählbewegung und deren Drehbewegung in einer Schaltbewegung resultiert, sowie eine Servounterstützungseinrichtung für die Schaltbewegung, welche bei der Drehbewegung der zentralen Schaltwelle durch Übertragung der Drehbewegung über Stifte zur Übertragung der Handschaltkraft und einen mit den Stiften in Wirkverbindung stehenden Hebel auf ein Steuerventil der Servounterstützungseinrichtung aktiviert wird, wobei die Stifte zur Übertragung der Handschaltkraft in Längsnuten im Umfang der Schaltwelle eingreifen und derart in den Längsnuten angeordnet sind, dass eine axiale Verschiebung der Schaltwelle ermöglicht wird, **dadurch gekennzeichnet, dass** die Servounterstützungseinrichtung (10) in bestimmten Gängen überbrückbar ist.

2. Schaltvorrichtung für das Getriebe eines Kraftfahrzeugs nach Anspruch 1, **dadurch gekennzeichnet, dass** die Drehbewegung der zentralen Schaltwelle (2) bei den durch die Servounterstützungseinrichtung (10) nicht zu unterstützenden Gängen nicht auf die Stifte (7) zur Übertragung der Handschaltkraft übertragen wird.

3. Schaltvorrichtung für das Getriebe eines Kraftfahrzeugs nach Anspruch 1 oder 2, **dadurch gekennzeichnet, dass** zur Überbrückung der Servounterstützungseinrichtung (10) beim Schalten von bestimmten Gängen an den Längsnuten (6) in Bereichen, die den Gassen der ohne Servounterstützung zu schaltenden Gänge entsprechen, Quernuten (18, 18') am Umfang der Schaltwelle (2) vorgesehen sind, welche ein Verdrehen der Schaltwelle (2) zum Schalten ohne eine daraus resultierende Bewegung der Stifte (7) zur Übertragung der Handschaltkraft ermöglichen.

4. Schaltvorrichtung für das Getriebe eines Kraftfahrzeugs nach Anspruch 1, 2 oder 3, **dadurch gekennzeichnet, dass** die Schaltwelle (2) innerhalb einer Hohlwelle (4) um eine Achse (5) drehbar gelagert ist, wobei die Stifte (7) zur Übertragung der Handschaltkraft in einem Hebel (8) drehbar gelagert sind und der Hebel (8) in eine Steuerstange (11) der Servounterstützungseinrichtung (10) eingreift.

5. Schaltvorrichtung für das Getriebe eines Kraftfahrzeugs nach Anspruch 4, **dadurch gekennzeichnet, dass** der Hebel (8) zur Reduzierung von Reibungsverlusten eine auf einem Bolzen (12) drehbar angeordnete Rolle (13) aufweist, die in die Steuerstange (11) der Servounterstützungseinrichtung (10) eingreift.

6. Schaltvorrichtung für das Getriebe eines Kraftfahrzeugs nach Anspruch 4 oder 5, **dadurch gekennzeichnet, dass** die von der Servounterstützungseinrichtung (10) erzeugte Verstärkungskraft von einer Kolbenstange (14) auf einen Hebel (15) und anschließend auf die Hohlwelle (4) übertragen wird, wobei die Hohlwelle (4) Langlöcher (16) aufweist, durch die Stifte (17) hindurchragen, die in einem Mitnehmer (19) angeordnet sind, der auf die Schaltschienen des Getriebes einwirkt.

## Claims

1. Gearshift device for the transmission of a motor vehicle, comprising a central gearshift shaft, the axial displacement of which results in a selecting movement and the rotational movement of which results in a gearshift movement, and a servo-assisting means for the gearshift movement, which servo-assisting means is activated, upon the rotational movement of the central gearshift shaft, by transmission of the rotational movement via pins for transmitting the manual shifting force and via a lever operatively connected to the pins to a control valve of the servo-assisting means, wherein the pins for transmitting the manual shifting force engage in longitudinal grooves in the circumference of the gearshift shaft and are arranged in the longitudinal grooves in such a manner that the gearshift shaft can be displaced axially, **characterized in that** the servo-assisting means (10) can be bridged in certain gears.

2. Gearshift device for the transmission of a motor vehicle according to Claim 1, **characterized in that** the rotational movement of the central gearshift shaft (2) is not transmitted to the pins (7) for transmitting the manual shifting force in the gears which are not to be assisted by the servo-assisting means (10).

3. Gearshift device for the transmission of a motor vehicle according to Claim 1 or 2, **characterized in that**, in order to bridge the servo-assisting means (10) during the shifting of certain gears, the circumference of the gearshift shaft (2) is provided with transverse grooves (18, 18') on the longitudinal grooves (6) in regions which correspond to the channels of the gears to be shifted without servo-assistance, said transverse grooves permitting rotation of the gearshift shaft (2) for gearshifting purposes without a resultant movement of the pins (7) for transmitting the manual shifting force.

4. Gearshift device for the transmission of a motor vehicle according to Claim 1, 2 or 3, **characterized in that** the gearshift shaft (2) is mounted within a hollow shaft (4) so as to be rotatable about an axis (5), the pins (7) for transmitting the manual shifting force being mounted rotatably in a lever (8), and the lever (8) engaging in a control rod (11) of the servo-assisting means (10).

5. Gearshift device for the transmission of a motor vehicle according to Claim 4, **characterized in that**, in order to reduce friction losses, the lever (8) has a roller (13) which is arranged rotatably on a bolt (12) and engages in the control rod (11) of the servo-assisting means (10).

6. Gearshift device for the transmission of a motor vehicle according to Claim 4 or 5, **characterized in that** the boosting force generated by the servo-assisting means (10) is transmitted by a piston rod (14) to a lever (15) and subsequently to the hollow shaft (4), the hollow shaft (4) having elongated holes (16) through which pins (17) protrude, the pins being arranged in a driver (19) which acts on the gearshift rails of the transmission.

## Revendications

1. Dispositif de changement de vitesse pour la transmission d'un véhicule automobile, comprenant un arbre de changement de vitesse central, dont le déplacement axial résulte en un mouvement de sélection et dont le mouvement de rotation résulte en un mouvement de commutation, ainsi qu'un dispositif d'assistance par asservissement pour le mouvement de commutation, qui est activé lors du mouvement de rotation de l'arbre de changement de vitesse central par transfert du mouvement de rotation, par le biais de goupilles pour le transfert de la force de commutation manuelle et par le biais d'un levier en liaison fonctionnelle avec les goupilles, à une soupape de commande du dispositif d'assistance par asservissement, les goupilles pour le transfert de la force de commutation manuelle s'engageant dans des rainures longitudinales dans la périphérie de l'arbre de changement de vitesse et étant disposées dans les rainures longitudinales, de manière à permettre un déplacement axial de l'arbre de changement de vitesse, **caractérisé en ce que** le dispositif d'assistance par asservissement (10) peut être surmonté dans certains rapports.

2. Dispositif de changement de vitesse pour la transmission d'un véhicule automobile selon la revendication 1, **caractérisé en ce que** le mouvement de rotation de l'arbre de changement de vitesse central (2) n'est pas transmis aux goupilles (7) pour le transfert de la force de commutation manuelle dans le cas de rapports ne devant pas être assistés par le dispositif d'assistance par asservissement (10).

3. Dispositif de changement de vitesse pour la transmission d'un véhicule automobile selon la revendication 1 ou 2, **caractérisé en ce que** pour surmonter le dispositif d'assistance par asservissement (10) lors du passage de rapports spécifiques, des rainures transversales (18, 18') sont prévues sur la périphérie de l'arbre de changement de vitesse (2) au niveau des rainures longitudinales (6) dans des régions qui correspondent aux voies des rapports à passer sans assistance par asservissement, les rainures transversales permettant une rotation de l'arbre de changement de vitesse (2) pour effectuer la commutation sans mouvement en résultant des goupilles (7) pour le transfert de la force de commutation manuelle.

4. Dispositif de changement de vitesse pour la transmission d'un véhicule automobile selon la revendication 1, 2 ou 3, **caractérisé en ce que** l'arbre de changement de vitesse (2) est monté à rotation autour d'un axe (5) à l'intérieur d'un arbre creux (4), les goupilles (7) pour le transfert de la force de commutation manuelle étant montées à rotation dans un levier (8) et le levier (8) s'engageant dans une tige de commande (11) du dispositif d'assistance par asservissement (10).

5. Dispositif de changement de vitesse pour la transmission d'un véhicule automobile selon la revendication 4, **caractérisé en ce que** le levier (8) présente, pour la réduction des pertes par friction, un rouleau (13) disposé à rotation sur un boulon (12), qui s'engage dans la tige de commande (11) du dispositif d'assistance par asservissement (10).

6. Dispositif de changement de vitesse pour la transmission d'un véhicule automobile selon la revendication 4 ou 5, **caractérisé en ce que** la force d'amplification produite par le dispositif d'assistance par asservissement (10) est transmise d'une tige de piston (14) à un levier (15) et ensuite à l'arbre creux (4), l'arbre creux (4) présentant des trous oblongs (16), à travers lesquels passent les goupilles (17), qui sont disposées dans un dispositif d'entraînement (19) qui agit sur les tiges de changement de vitesse de la transmission.
